# EUROPÄISCHE PATENTANMELDUNG

(11) **EP 4 212 461 A1**
(43) Veröffentlichungstag der Anmeldung: **19.07.2023**
(21) Anmeldenummer: 23151246.8
(22) Anmeldetag: 20.12.2021
(51) Int. Cl.: B65G 47/82, B65D 88/54, B65G 65/42, B65G 65/44, B65G 65/46

(54) **ANLAGE ZUM EIN- UND AUSLAGERN VON SCHÜTTGUT UND VERFAHREN HIERFÜR**

(62) Teilanmeldung aus: 21216035.2
(71) Anmelder: Zürcher Holding GmbH, 77974 Meißenheim (DE)
(72) Erfinder: ZÜRCHER, Ralf, 77974 Meißenheim (DE); VONHOFF, Axel, 77974 Meißenheim (DE)
(74) Vertreter: mepat Patentanwälte

(57) **Zusammenfassung**

Die vorliegende Erfindung stellt Anlagen (1) und Verfahren zum Ein- und Auslagern von Schüttgut (1000) bereit. Die Anlage umfasst zumindest eine Schüttgutlagerbox (100), die zwei Seitenwände (102, 102') und eine offene Seite zum Ein- und Auslagern von Schüttgut aufweist, der gegenüber eine Rückwand (101) angeordnet ist, wobei die Seitenwände (102, 102') und die Rückwand (101) auf einer Bodenplatte (103) angeordnet sind. An einer zwischen der Bodenplatte (103) und der Rückwand (101) vorliegenden Kante ist eine Auslassöffnung für Schüttgut (1000) angeordnet, unterhalb der eine Auslagereinrichtung vorliegt. Ferner gibt es eine Vorrichtung zum Bewegen von Schüttgut (1000), und die Anlage hat zumindest eine Erfassungsvorrichtung, die zum Erfassen einer Menge an Schüttgut (1000) in der Schüttgutlagerbox (100) ausgebildet ist, und eine Steuerungsvorrichtung, die mit der Erfassungsvorrichtung und der Vorrichtung zum Bewegen von Schüttgut (1000) gekoppelt ist, wobei diese Vorrichtung (1000) steuerbar ist.

## Beschreibung

Die Erfindung betrifft eine Anlage zum Ein- und Auslagern von Schüttgut in Schüttgutlagerboxen, und ein Verfahren, um den Ein- und Auslagervorgang in der Anlage durchzuführen.

Aus dem Stand der Technik ist das Ein- und Ausstapeln von Schüttgut in langgestreckten Schüttguthalden bekannt. So beschreibt die EP 0 283 697 A1 eine Vorrichtung zum Ein- und Ausstapeln von Schüttgut in langgestreckten Schüttguthalden, wobei dort das auszustapelnde Schüttgut auf das Untertrum und das einzustapelnde Schüttgut auf das Obertrum eines in Längsrichtung der Halde verlaufenden Förderbandes zugeführt wird und zur Überführung des auszustapelnden Schüttgutes von der Ausstapel-Fördereinrichtung auf das Untertrum des Förderbandes ein kurzer Zwischenförderer vorgesehen ist.

Bei den bekannten Schüttguthalden, die je nach Ausgestaltung auch als Schüttgutlagerboxen bezeichnet werden und dann entsprechend mit Rückwand und Seitenwänden und gegebenenfalls mit Bodenplatte ausgestaltet werden, ist stets von Relevanz, wie das Schüttgut unter idealer Raumausnutzung eingestapelt oder eingelagert werden kann, und wie es geschickt und mit geringem Aufwand - sowohl zeitlich als auch Apparativ und in Bezug auf Wartungs- und Verwaltungsaufwand - bewirtschaftet werden kann.

Ausgehend von diesem Stand der Technik liegt der Erfindung die Aufgabe zugrunde, eine Anlage zum Ein- und Auslagern von Schüttgut bereitzustellen, die ein verbessertes Bewegen des Schüttgutes in einer Schüttgutlagerbox ermöglicht.

Diese Aufgabe wird durch eine Anlage zum Ein- und Auslagern von Schüttgut mit den Merkmalen des Anspruchs 1 gelöst.

Die weitere Aufgabe, die Handhabung des Schüttgutes in einer Anlage zum Ein- und Auslagern von Schüttgut zu verbessern, wird durch das Verfahren mit den Merkmalen des unabhängigen Anspruchs 13 gelöst.

Weiterbildungen der Vorrichtung und des Verfahrens sind in den jeweiligen Unteransprüchen ausgeführt.

Gemäß einer ersten Ausführungsform der erfindungsgemäßen Anlage zum Ein- und Auslagern von Schüttgut umfasst diese wenigstens eine Schüttgutlagerbox. Eine solche Schüttgutlagerbox hat zwei Seitenwände und eine offene Seite zum Ein- und Auslagern von Schüttgut, der gegenüber eine Rückwand angeordnet ist. Seitenwände und Rückwand sind auf einer Bodenplatte angeordnet. Dabei ist an einer zwischen der Bodenplatte und der Rückwand vorliegenden Kante zumindest eine Auslassöffnung für Schüttgut angeordnet, unterhalb der eine Auslagereinrichtung vorliegt. Die Anlage verfügt über zumindest eine Vorrichtung zum Bewegen von Schüttgut, die vorteilhaft das Schüttgut auch zu der Auslassöffnung befördert und damit abfördert. Innerhalb der Schüttgutlagerbox kann diese Vorrichtung das Einlagern des Schüttguts unterstützen, etwa durch bewegen des Schüttguts an geeignete Positionen. Dabei wird die Auslassöffnung, die an der Kante vorliegt, die durch die Rückwand und die Bodenplatte gebildet wird, durch eine oder mehrere Durchtrittsöffnungen gebildet. Die Vorrichtung zum Bewegen von Schüttgut weist eine Schieberanlage auf, die einen Rahmen aufweist, an dem ein Schieber angeordnet ist, der von der offenen Seite der Schüttgutlagerbox zumindest auf eine Länge bis zu der zumindest einen Auslassöffnung verfahrbar, bevorzugt teleskopierbar ist, und der eine Breite aufweist, die zumindest einem Teil oder der ganzen Breite der Rückwand entspricht. Diese Anlage hat keine Erfassungsvorrichtungen, die zum Erfassen der Menge an Schüttgut in der Schüttgutlagerbox ausgebildet sind, und die mit einer oder mehreren Steuerungsvorrichtung(en) gekoppelt ist, die die Vorrichtung zum Bewegen von Schüttgut direkt oder indirekt steuern.

Oberenends an den zwei Seitenwänden kann nach einer weiteren Ausführungsform der alternativen Anlage ein Gegenlager für den Rahmen ausgebildet sein, das auch aus Schiene bzw. Hängevorrichtung gestaltet sein kann und mittels dem der Rahmen verfahrbar ist.

"Auslagereinrichtung" meint hierin jede geeignete Vorrichtung zum Auslagern bzw. Abtransport von Schüttgut.

Die Anlage kann durchaus aber zwei, drei oder noch mehr Schüttgutlagerboxen aufweisen, die vorteilhaft benachbart zueinander angeordnet sind. Dann können die Schüttgutlagerboxen auch Seitenwände teilen und können eine gemeinsame Rückwand aufweisen. Die Bodenplatte hierin sieht vor, dass unterhalb derselben noch Raum für eine oder mehrere Auslagereinrichtungen vorliegt.

Dies meint hierin, dass das Schüttgut, das ja nicht wieder durch die Zuförderrichtung, von der gegenüber der Rückwand liegenden offenen Seite in das Innere der Schüttgutlagerbox liegt, abgefördert oder ausgelagert wird, in diesem Fall in eine Ebene unter der Bodenplatte geschafft wird, indem es durch eine oder mehrere Auslassöffnungen fällt, und von wo es abgefördert wird. Dies kann bspw. mit einem Förderband geschehen.

Nach einer weiteren Ausführungsform der erfindungsgemäßen Anlage kann oder können die Auslassöffnung(en), die an der Kante vorliegt bzw. vorliegen, die durch die Rückwand und die Bodenplatte gebildet wird, eine oder mehrere Durchtrittsöffnungen sein. Diese Auslassöffnung(en) kann/können einen polygonalen, bevorzugt einen rechteckigen aber auch einen halbrunden Querschnitt aufweisen. Sie können wie Löcher, Langlöcher oder auch Schlitze ausgebildet sein und erlauben, dass das Schüttgut in die unter der Bodenplatte befindliche Ebene befördert wird.

Die erfindungsgemäße Vorrichtung zum Bewegen von Schüttgut weist eine Schieberanlage auf, die an der offenen Seite der Schüttgutlagerbox angeordnet ist und die einen Rahmen aufweist, an dem ein Schieber angeordnet ist, der mittels einer Verfahrvorrichtung - bevorzugt einer teleskopierbaren Verfahrvorrichtung - von der offenen Seite der Schüttgutlagerbox zumindest auf eine Länge bis zu der zumindest einen Auslassöffnung verfahrbar, bevorzugt teleskopierbar, ist und der eine Breite aufweist, die zumindest einem Teil oder der ganzen Breite der Rückwand entspricht.

Wenn die erfindungsgemäße Anlage eine erfindungsgemäße Vorrichtung zum Bewegen von Schüttgut aufweist, so kann diese nach noch einer weiteren Ausführungsform die Schieberanlage mit einer Hebevorrichtung aufweisen, die mit dem Rahmen gekoppelt ist und dazu ausgebildet ist, die teleskopierbare Verfahrvorrichtung mit dem Schieber entlang der Höhe des Rahmen zu verfahren. Dabei kann die Verfahrvorrichtung entweder nur ein Stück weit oder auch bis zum oberen Rand des Rahmens verfahren werden. So kann vorteilhaft der Schieber jeweils bis zur Höhe der Oberkante des eingelagerten Schüttguts angehoben werden und dieses bewegen.

Üblicherweise wird das Schüttgut, wenn es eingelagert wird, Häufen bilden. Je nachdem, durch welche Vorrichtung das Schüttgut eingelagert wird - bspw. von oben durch Befülltrichter, von oben oder von der Frontseite (offene Seite, die hierin als vordere Seite verstanden wird), durch ein oder mehrere Förderbänder, oder auch durch Radlader oder sonstige Fördervorrichtungen, wird das Versetzen des Schüttguts und auch dessen Überführung zu der Auslassöffnung zwecks Auslagerung notwendig.

Es ist daher vorteilhaft, wenn nach einer noch weiteren Ausführungsform der Erfindung eine Schiebevorrichtung an oder vor der Bodenplatte an der offenen Seite der Schüttgutlagerbox angeordnet ist, an oder mittels der der Rahmen, an dem der Schieber angeordnet ist, in Bezug zu der Breite der offenen Seite der zumindest einen Schüttgutlagerbox quer verschiebbar ist.

Der Rahmen kann nach einer noch weiteren Ausführungsform der Erfindung zumindest zwei vertikale Stützelemente aufweisen, die an einem oberen, bodenfernen Ende durch zumindest ein horizontales Stabilisierungselement miteinander verbunden sind, und an einem unteren, bodennahen Ende zumindest eine Verfahrvorrichtung aufweisen.

Nach einer bevorzugten Ausgestaltung können die vertikalen Stützelemente - es kann an jeder vertikalen Rahmenseite eines vorliegen, es können aber auch, je nach Stabilitätserfordernis an den Rahmen mehrere sein - Traversenelemente oder Plattenelemente sein.

Die Verfahrvorrichtung kann Räder oder Rollen aufweisen, um den Rahmen verschiebbar bzw. verfahrbar auszuführen. Generell weiß der Fachmann außer den Rädern oder Rollen auch Äquivalente mittel hier einzusetzen, bspw. Kufen.

Der Begriff "bodennah" meint hierin das zu dem Boden, auf dem auch die Bodenplatte anliegt, weisende Ende des Rahmens, wohingegen "bodenfern" das davon abgewandte und folglich obere Ende des Rahmens meint.

Nach einer noch weiteren Ausführungsform kann die Anlage eine Schienenvorrichtung zum Verschieben und als Gegenlager für den Rahmen aufweisen. Dieses Gegenlager, das auch das Verschieben des Rahmens zulässt, kann oberenends an den zwei Seitenwänden der Schüttgutlagerbox, vorliegen. Es ist bevorzugt ein Querholm, der erlaubt, dass entlang seiner Länge der obere, bodenferne Abschnitt des Rahmens verschiebbar ist.

Wenn mehrere Schüttgutlagerboxen nebeneinander vorliegen, kann sich diese Schienenvorrichtung über die gesamte Breite der Vorderseiten der Schüttgutlagerboxen erstrecken.

Der teleskopierbare Schieber kann eine Mehrzahl ineinander verfahrbarer und teleskopierbarer Schiebeelemente aufweisen, die über eine Vorrichtung zum Halten und Betätigen an dem horizontalen Stabilisierungselement des Rahmens angeordnet sind.

Ein erstes der Schiebeelemente kann an einer Befestigungsvorrichtung, die unten im Rahmen angeordnet sein kann, befestigt sein, während das letzte der Schiebeelemente den Schieber haltert.

Die teleskopierbaren Schiebeelemente können flache Rahmen- oder Plattenelemente, aber auch Hubzylinder oder Elektrozylinder sein, die auch elektromotorisch betrieben werden können.

Die Vorrichtung zum Halten und Betätigen der Schiebeelemente kann hydraulisch (Hydraulikelemente), pneumatisch, per Zahnradantrieb oder per Seilzug betätigt werden.

Die Befestigungsvorrichtung ist nach einer noch weiteren Ausführungsform der erfindungsgemäßen Anlage zwischen den zumindest zwei vertikalen Stützelementen des Rahmens positioniert und weist zwei Schenkel auf, die jeweils einen Haltefuß haben, an dem ein Schwenkarm befestigt ist, der schwenkbar seitlich mit den teleskopierbaren Schiebeelementen, bevorzugt mit einer der beiden Längskanten des ersten Rahmen- oder Plattenelements verbunden ist. Dabei kommt in einem eingefahrenen Zustand der teleskopierbaren Schiebeelemente die Mehrzahl der Rahmen- oder Plattenelemente an oder in dem ersten der Rahmen- oder Plattenelement zur Anlage. In einem eingefahrenen Nichtbenutzungszustand der teleskopierbaren Schiebeelemente, wenn also kein Schüttgut bewegt wird, werden diese von einer Position innerhalb der Schüttgutlagerbox nach außerhalb der Schüttgutlagerbox verschwenkt, indem die Rahmen- oder Plattenelemente, Hub- oder Elektrozylinder durch den Schwenkarm unter dem horizontalen Stabilisierungselement des Rahmens aus der Schüttgutlagerbox herausgeschwenkt werden und der Schieber in die Schüttgutlagerbox hinein weisend angeordnet bleibt.

Die Befestigungsvorrichtung kann auch die Hebevorrichtung bereitstellen.

Nach einer noch weiteren Ausführungsform der erfindungsgemäßen Anlage weist die Vorrichtung zum Bewegen von Schüttgut bzw. deren Schiebevorrichtung zumindest zwei Schienen auf, die sich entlang der Breite der zumindest einen oder entlang der mehreren Schüttgutlagerboxen erstrecken, und in oder auf denen der Rahmen, an dem der Schieber angeordnet ist, verschiebbar ist, und wobei bevorzugt zwischen den zumindest zwei Schienen entlang deren Länge zumindest ein entlang der Schienen verschiebbar befestigtes Profilelement angeordnet ist, das Ausnehmungen aufweist, mit denen die Haltefüße der Befestigungsvorrichtung in Eingriff stehen.

Nach einer erfindungsgemäßen Ausführungsform eines Verfahrens zum Ein- und Auslagern von Schüttgut in einer erfindungsgemäßen Anlage ohne an der Steuerung einer Vorrichtung zum Bewegen von Schüttgut beteiligter Erfassungsvorrichtung, umfasst dieses die Schritte des
- Bereitstellens der Schüttgutlagerbox, die zwei Seitenwände und eine offene Seite zum Ein- und Auslagern von Schüttgut aufweist, der gegenüber die Rückwand angeordnet ist, wobei die Seitenwände und die Rückwand auf der Bodenplatte angeordnet sind, und wobei an der zwischen der Bodenplatte und der Rückwand vorliegenden Kante zumindest eine Auslassöffnung für Schüttgut angeordnet ist, unterhalb der eine Auslagereinrichtung für Schüttgut vorliegt, wobei die Auslassöffnung, die an der Kante vorliegt, die durch die Rückwand und die Bodenplatte gebildet wird, eine oder mehrere Durchtrittsöffnungen ist/sind, und
- des Bereitstellens der Vorrichtung zum Bewegen von Schüttgut,
- bei einem Einlagervorgang oder einem Auslagervorgang von Schüttgut in der Schüttgutlagerbox Positionieren des Schiebers der Schieberanlage in eine Schiebeposition an dem Schüttgut, dann das
- Verfahren des Schiebers und Bewegen des Schüttgutes.

Es kann ein Entleerungsmodus der Schüttgutlagerbox ausgeführt werden, der basierend auf einem vorbestimmten Entleerungsmuster, das unabhängig von der Erfassung der Menge des Schüttguts in der Schüttgutlagerbox festgelegt werden kann, erstellt werden. Mit diesem Entleerungsmodus kann oder können die Vorrichtungen zum Bewegen von Schüttgut betrieben werden.

Weitere Ausführungsformen der Vorrichtungen und Verfahren sowie einige der Vorteile, die mit diesen und weiteren Ausführungsformen verbunden sind, werden durch die nachfolgende ausführliche Beschreibung unter Bezug auf die begleitenden Figuren deutlich und besser verständlich. Gegenstände oder Teile derselben, die im Wesentlichen gleich oder ähnlich sind, können mit denselben Bezugszeichen versehen sein. Die Figuren sind lediglich eine schematische Darstellung einer Ausführungsform der Erfindung.

Dabei zeigen:
- **Fig. 1**: eine perspektivische Ansicht der erfindungsgemäßen Anlage zum Ein- und Auslagern von Schüttgut mit eingelagertem Schüttgut,
- **Fig. 2**: eine perspektivische Ansicht einer ersten Ausführungsform der erfindungsgemäßen Anlage ohne eingelagertes Schüttgut,
- **Fig. 3**: eine weitere perspektivische Ansicht der ersten Ausführungsform der erfindungsgemäßen Anlage mit ausgefahrener Schiebervorrichtung,
- **Fig. 4**: eine Detailansicht der ausgefahrenen Schiebervorrichtung gemäß Fig. 3,
- **Fig. 5**: eine perspektivische Ansicht einer weiteren Ausführungsform der erfindungsgemäßen Anlage ohne eingelagertes Schüttgut,
- **Fig. 6**: eine perspektivische Ansicht einer nicht erfindungsgemäßen Ausführungsform der Anlage ohne eingelagertes Schüttgut.

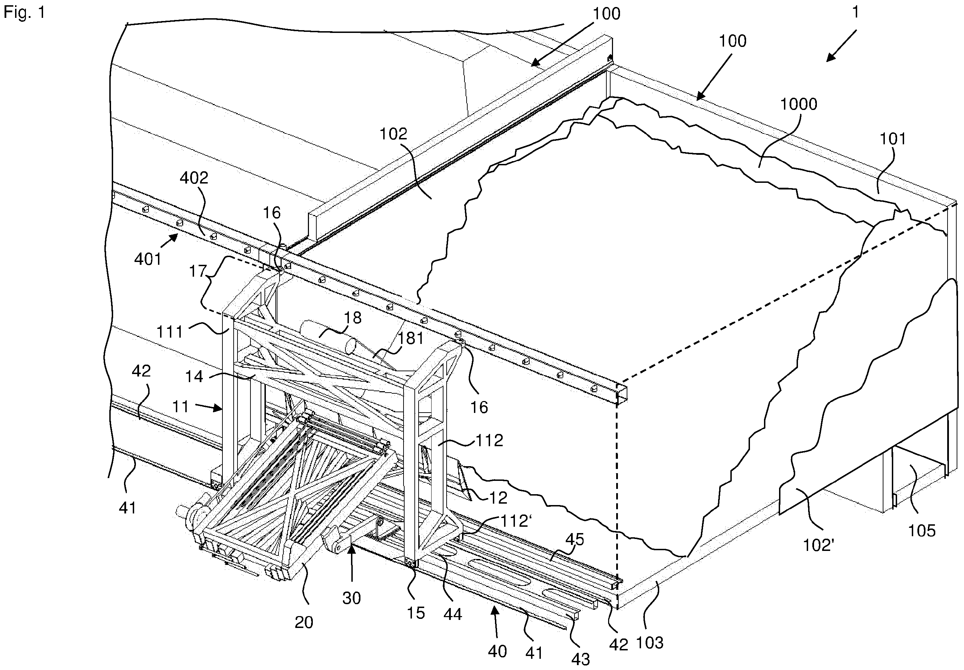

Eine in **Fig. 1** gezeigte Anlage 1 zum Ein- und Auslagern von Schüttgut 1000 weist zwei Schüttgutlagerboxen 100 auf, wobei die **Fig. 1 bis 6** jeweils eine solche Schüttgutlagerbox 100 im Detail darstellen. Jede Schüttgutlagerbox 100 wird durch zwei Seitenwände 102, 102' und eine Rückwand 101 gebildet. Zwischen den Seitenwänden 102, 102' liegt eine Bodenplatte 103 vor, auf der das Schüttgut 1000 in **Fig. 1** gelagert ist.

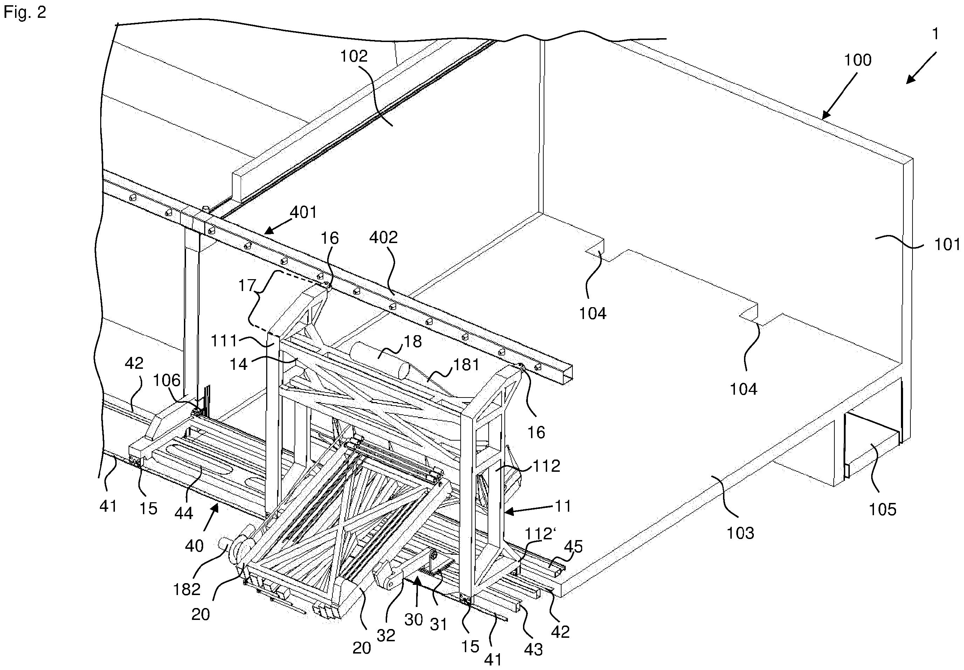

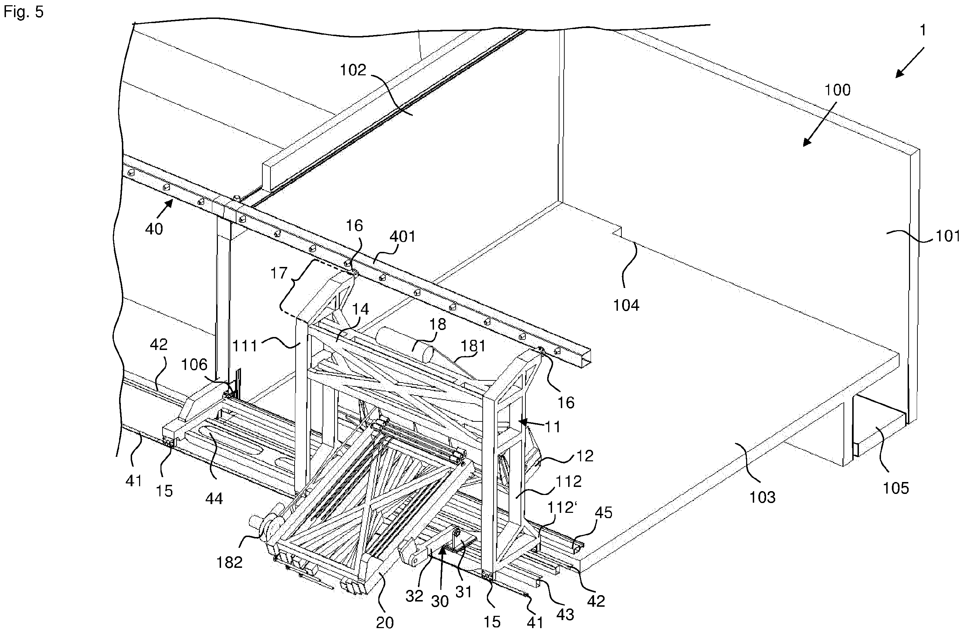

Wie in **Fig. 2 bis 6** dargestellt, sind in der Bodenplatte 103 Auslassöffnungen 104 vorgesehen, durch die Schüttgut 1000 ausgetragen werden kann. Die Auslassöffnungen 104 liegen an der Kante vor, die durch die Rückwand 101 und die Bodenplatte 103 gebildet wird, und können unterschiedlich geformt sein: **Fig. 2** zeigt zwei quadratische Auslassöffnungen 104 in der Bodenplatte 103, in **Fig. 5** ist in die Bodenplatte 103 eine schlitzförmige Auslassöffnung 104 eingebracht, die sich von der einen Seitenwand der Schüttgutlagerbox bis kurz vor die Seitenwand 102 erstreckt.

Unterhalb der Bodenplatte 103 und der Auslassöffnungen 104 ist eine Auslagereinrichtung 105 angeordnet, auf die Schüttgut zum Auslagern bzw. Abfördern durch die Auslassöffnungen 104 fallen kann. Gegenüber der Rückwand 101 liegt eine offene Seite vor, an der eine Vorrichtung zum Bewegen von Schüttgut 1000 angeordnet ist, mit deren Hilfe das Schüttgut 1000 auf der Bodenplatte 103 arrangiert oder auch in die Auslassöffnungen geschoben werden kann. Alternativ (figurativ nicht gezeigt) könnte ein durchgängiger Schlitz in der Bodenplatte vorgesehen sein. Dann kann der Schieber alternativ auch über die ganze Breite ausgeführt werden. Der Schlitz könnte bspw. mit dünnen Stegen ausgeführt sein, um das seitliche Verschieben des Schüttguts über den Öffnungen unnötig zu machen.

Die Vorrichtung zum Bewegen von Schüttgut 1000 hat ferner eine Schieberanlage, die eine Breite aufweist, die einem Teil der Breite der Rückwand 101 entspricht. Die Schieberanlage umfasst einen Rahmen 11, an dem die Komponenten der Schieberanlage befestigt sind und der entlang der offenen Seite der Schüttgutlagerbox 100 verfahren werden kann.

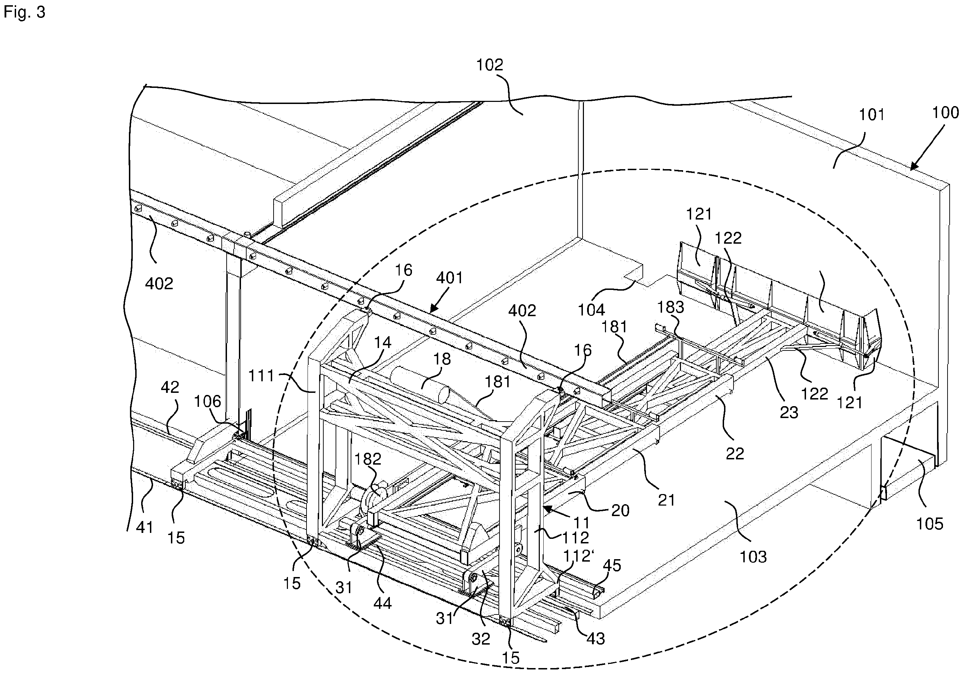

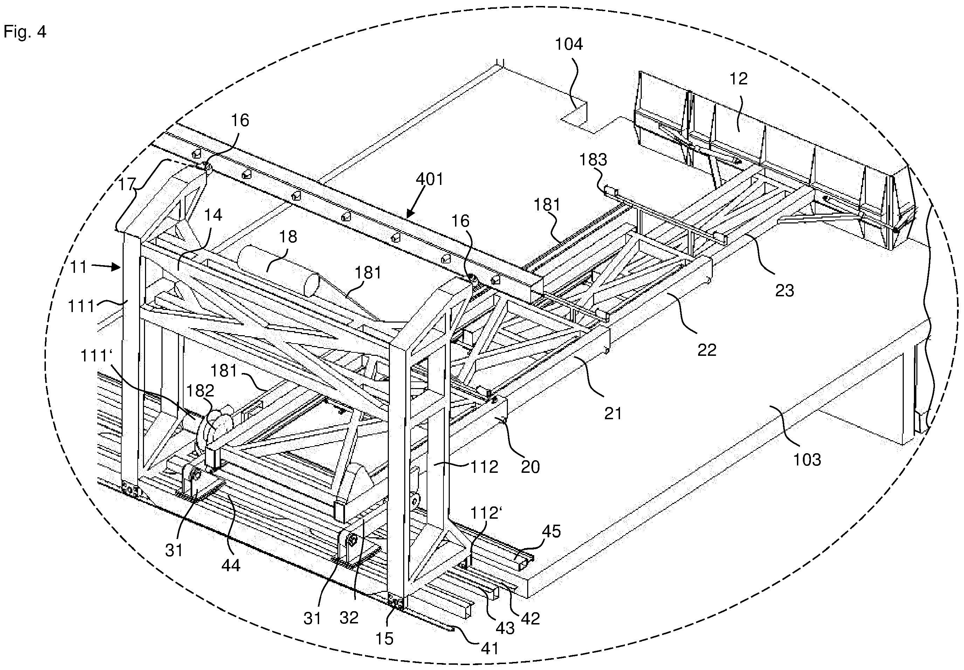

Der Rahmen 11 weist zwei vertikale Traversenelemente 111, 112 als seitliche Stützelemente auf. Die Traversenelemente 111, 112 sind an einem oberen, bodenfernen Ende durch ein horizontales Stabilisierungselement 14 miteinander verbunden. Auch dieses Stabilisierungselement 14 ist, wie insbesondere **Fig. 3** **und** **4** zeigen, ein Traversenelement. An ihrem unteren, bodennahen Ende sind Rollen 15 vorgesehen, die eine Verfahrvorrichtung für den Rahmen 11 bilden.

An dem Rahmen 11 ist ein teleskopierbar ausfahrbarer Schieber 12 angeordnet, der in **Fig. 1 bis 6** vier ineinander verfahrbare und teleskopierbare Rahmenelemente 20 bis 23 aufweist.

Der Rahmen 11 haltert an dem horizontalen Stabilisierungselement 14 des Rahmens eine Vorrichtung 18 zum Halten und Betätigen des teleskopierbaren Schiebers 12. In einem unteren Abschnitt des Rahmens 11 ist eine Befestigungsvorrichtung 30 vorgesehen, die ein erstes Schieberelement bzw. Rahmenelement 20 haltert. Die weiteren Rahmenelemente 21 bis 23 sind in dem ersten Rahmenelement 20 gelagert und an dem letzten Rahmenelement 23 ist der Schieber 12 befestigt.

Der Schieber 12 kann auf eine Länge bis zu der zumindest einen Auslassöffnung 104 verfahren werden, wie in **Fig. 3** und **4** gezeigt ist. Der Schieber 12 hat, um das Schüttgut effektiv aus der Schüttgutlagerbox 100 zu den Auslassöffnungen zu schieben, zu jeder seiner äußeren Seiten einklappbare Seitenelemente 121, die in einem vorzugsweise rechten Winkel oder auch jedem Winkel zwischen 0° und 90° durch einen Hubzylinder 122 pro Seite nach vorne, zur Rückwand 101 hin, eingeklappt werden können.

Die teleskopierbaren Schiebeelemente, hier Plattenelemente 20 bis 23, des Schiebers 12 sind mit einer Vorrichtung 18 zum Halten und Betätigen in **Fig. 3** und **Fig. 4** über Seilzugelemente verbunden. Die Vorrichtung 18 zum Halten und Betätigen ist an einer oberen Kante des Stabilisierungselements 14 angeordnet. Dieser Vorrichtung ist die Befestigungsvorrichtung 30 zugeordnet. Die Befestigungsvorrichtung 30 ist zwischen den vertikalen Traversenelementen 111, 112 des Rahmens 11 positioniert und weist zwei Schenkel auf, die jeweils einen Haltefuß 31 haben, an dem ein Schwenkarm 32 befestigt ist, der schwenkbar an den beiden Längskanten des ersten Rahmenelements 20 des Schiebers 12 verbunden ist. In einem eingefahrenen Zustand, wie in **Fig. 2** oder **Fig. 5** gezeigt, der einem Nichtbenutzungszustand der Schieberanlage entspricht, liegen die teleskopierbaren Rahmenelemente 21 bis 23 an dem ersten Rahmenelement 20 an. Durch den Schwenkarm 32 sind die eingefahrenen Rahmenelemente 20 bis 23 unter dem horizontalen Stabilisierungselement 14 des Rahmens 11 aus der Schüttgutlagerbox 100 herausgeschwenkt angeordnet. In einem ausgefahrenen Zustand schwenkt der Schwenkarm 32 die Rahmenelemente 20 bis 23 aus dem Rahmen 11 heraus in die Schüttgutlagerbox 100 hinein.

Die Befestigungsvorrichtung 30 stellt in Zusammenarbeit mit der Vorrichtung 18 zum Halten und Betätigen auch eine Hebevorrichtung für den Schieber 12 bereit, so dass der Schieber 12 nicht nur entlang der Bodenplatte 103, sondern auch in einer Ebene parallel zur Bodenplatte 103 bzw. in einem Winkel dazu bewegt werden kann. Dazu ist die Vorrichtung 18 zum Halten und Betätigen mit einem Seilzugsystem ausgestattet, wobei ein Seil 181 über ein Rollensystem mit einer motorisierten Seilzugrolle 182 verbunden ist. Das Seil 181 ist ferner bis zu einer Halterung 183, die sich an einem dritten Rahmenelement 22 des Schiebers 12 befindet, vorgespannt. Die Seilzugrolle 182 ist an einem der beiden Schwenkarme 32 seitlich angeordnet und macht zusammen mit der Vorrichtung 18 zum Halten und Betätigen, die eine korrespondierende motorisierte Seilzugrolle umfasst, das Verschwenken der teleskopierbaren Schiebeelemente, hier der Plattenelemente 20 bis 23 möglich.

Diese Ausführungsform der Erfindung basiert darauf (figurativ nicht gezeigt), dass das Seilzugsystem eine reine Hubeinrichtung ist, die die Höhe des Materialabtrags, also eine Höhe einer Schüttgutanhäufung definiert. Es ist möglich, hierdurch im Rückhub den Schieber vom Materialkontakt (Schüttgutkontakt) zu lösen. Die Hubbewegung kann über Seiltrommel, Kettenzug, Hydraulik- oder Elektrozylinder erfolgen.

Die Teleskopierbewegung kann bspw. über beidseitige Zahnstangen und Motore erfolgen, wobei ein Einzelantrieb jeder Teleskopstufe denkbar ist oder auch eine gekoppelte Teleskopierung aller Stufen gleichzeitig.

Der Rahmen 11 kann vor der offenen Seite der Schüttgutlagerbox 100 quer (also parallel zu der Rückwand 101) verfahren werden, wozu die Vorrichtung zum Bewegen von Schüttgut 1000 eine Schiebevorrichtung 40 aufweist. Die Schiebevorrichtung 40 umfasst zwei Schienen 41, 42, die sich auch vor weitere, benachbarte Schüttgutlagerboxen 100 erstrecken. Zwischen den Schienen 41, 42 ist ein entlang der Schienen 41, 42 verschiebbar gelagertes Profilelement 43 angeordnet. Das Profilelement 43 weist Ausnehmungen 44 auf, mit denen die Haltefüße 31 der Befestigungsvorrichtung 30 in Eingriff stehen. Ferner sind die Traversenelemente 111, 112 des Rahmens 11 über ihre Rollen 15 oder zu den Rollen alternative Elemente in oder auf den Schienen 41, 42 gelagert.

Die Schiebevorrichtung 40 kann ferner eine dritte Schiene 45 umfassen. Die Traversenelemente 111 und 112 laufen, wie dargelegt auf den Schienen 41,42. Diese Schienen 41,42 bieten keine seitliche Führung. Das untere, Richtung Schüttgutlagerbox 100 weisende Ende 112', 111' der Traversenelemente 111, 112 wird horizontal durch die Schiene 45 geführt, die mit den Enden 112', 111' der Traversenelemente 111, 112 fest verbunden ist. Diese Schiene 45 verläuft auf der Bodenplatte oder an der Bodenplatte 103 und wird in Taschen der Seitenwände 102 gehalten.

Wird der Rahmen 11 verfahren, so wird folglich die Schiene in die Tasche 106 eingefädelt um beidseitig gehalten zu werden.

Die Anordnung mit der Schiene 45 ist für Ausführungsformen der Erfindung ohne Erfassungsvorrichtungen wie bspw. die Kameras 51 geeignet.

Die Schiebevorrichtung 40 weist eine Schienenvorrichtung 401 auf, die dazu dient, den Rahmen 11 gegengelagert sicher verschieben zu können. Dazu ist oberenends an den zwei Seitenwänden 102, 102' der Schüttgutlagerbox 100 diese Schienenvorrichtung 401 vorgesehen, die einen Querholm 402 umfasst. Entlang der Länge dieses Querholms 402 ist ein oberer, bodenferner Abschnitt 17 des Rahmens 11 verschiebbar gelagert. Der obere Abschnitt 17 des Rahmens 11 weist dazu Rollen 16 auf, die den Rahmen 11 zusätzlich gegen den Querholm 402 lagern und so eine Bewegung des Rahmens 11 stabilisieren.

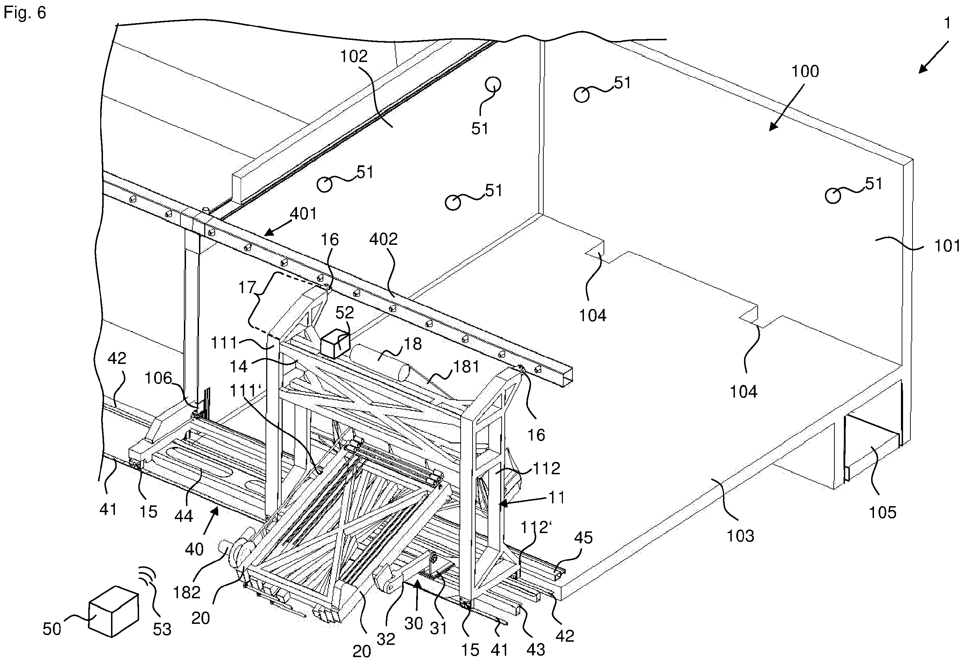

Die Anlage 1 zum Ein- und Auslagern von Schüttgut umfasst in einer nicht erfindungsgemäßen Ausführungsform ferner eine Erfassungsvorrichtung, mit der die Füllmenge des eingelagerten Schüttguts 1000 erfasst wird, wie in **Fig. 6** gezeigt ist. Dort umfasst die Erfassungsvorrichtung einige Kameras 51 als optische Sensoren, die kontinuierlich Bilder des Inneren der Schüttgutlagerbox 100 aufnehmen. Die Kameras 51 sind an den Seitenwänden 102, 102' und der Rückwand 101 auf verschiedenen Höhen angeordnet. Den Kameras 51 ist eine Datenverarbeitungseinheit 50 zugeordnet, die ferner mit einer Steuerungsvorrichtung 52 elektronisch verbunden ist, um eine automatisierte Ein- und Auslagerung des Schüttguts 1000 zu ermöglichen. Die Datenverarbeitungseinheit 50 kann ein mobiles Endgerät, wie ein Laptop oder Smartphone, oder ein fest angeordnetes Endgerät sein, mit dem eine automatisierte Überwachung des Innenraums der Schüttgutlagerbox 100 ermöglicht ist. Alle Komponenten der Erfassungsvorrichtung sind untereinander zum Datenaustausch, zur Datenverarbeitung und zur Steuerung der Vorrichtung zum Bewegen des Schüttguts elektronisch über geeignete Datenverbindungen, sei es kabelgebunden oder kabellos über ein mobiles Netzwerk, verbunden, in **Fig. 6** durch eine kabellose Verbindung 53 schematisiert.

Alternativ kann die Datenverarbeitungseinheit 50, die bspw. in einem Schaltschrank angeordnet sein kann, in der Nähe der Steuerungsvorrichtung 52 positioniert und so mit einer festen LAN-Verbindung angebunden werden.

Für die Steuerung der Schieberanlage muss an sich nur die Schüttgutoberfläche erfasst werden. Weil mit starken Staubemissionen zu rechnen ist, können vorteilhaft Sensoren zur Abstandsmessung (Ultraschall) in einem oberen Bereich der Seitenwände 102,102' die Kameras 51 sinnvoll ergänzen.

### BEZUGSZEICHENLISTE

- 1: Anlage zum Ein- und Auslagern von Schüttgut
- 11: Rahmen
- 12: Schieber
- 14: Stabilisierungselement
- 15: Rollen
- 16: Rollen
- 17: Oberer Abschnitt Rahmen 11
- 18: Vorrichtung zum Halten und Betätigen
- 20-23: Rahmenelemente des Schiebers 12
- 30: Befestigungsvorrichtung
- 31: Haltefuß
- 32: Schwenkarm
- 40: Schiebevorrichtung
- 41: Schiene
- 42: Schiene
- 43: Profilelement
- 44: Ausnehmung
- 45: Schiene
- 50: Datenverarbeitungseinheit
- 51: Kamera
- 52: Steuerungsvorrichtung
- 53: Kabellose Verbindung
- 101: Rückwand
- 100: Schüttgutlagerbox
- 102,102': Seitenwand
- 103: Bodenplatte
- 104: Auslassöffnung
- 105: Auslagereinrichtung
- 106: Tasche
- 111: Traversenelement
- 111': Ende Traversenelement
- 112: Traversenelement
- 112': Ende Traversenelement
- 121: Seitenelement
- 122: Hubzylinder
- 181: Seil
- 182: motorisierte Seilzugrolle
- 183: Halterung
- 401: Schienenvorrichtung
- 402: Querholm
- 1000: Schüttgut

## Patentansprüche

1. Anlage (1) zum Ein- und Auslagern von Schüttgut (1000), umfassend
- zumindest eine Schüttgutlagerbox (100), die zwei Seitenwände (102, 102') und eine offene Seite zum Ein- und Auslagern von Schüttgut aufweist, der gegenüber eine Rückwand (101) angeordnet ist, wobei die Seitenwände (102, 102') und die Rückwand (101) auf einer Bodenplatte (103) angeordnet sind, und wobei an einer zwischen der Bodenplatte (103) und der Rückwand (101) vorliegenden Kante zumindest eine Auslassöffnung (104) für Schüttgut (1000) angeordnet ist, unterhalb der eine Auslagereinrichtung vorliegt,
- zumindest eine Vorrichtung zum Bewegen von Schüttgut (1000), wobei die Auslassöffnung (104), die an der Kante vorliegt, die durch die Rückwand (101) und die Bodenplatte (103) gebildet wird, durch eine oder mehrere Durchtrittsöffnungen (104) gebildet wird,
**dadurch gekennzeichnet, dass**
die Vorrichtung zum Bewegen von Schüttgut (1000) eine Schieberanlage aufweist, die an der offenen Seite der Schüttgutlagerbox (100) angeordnet ist und einen Rahmen (11) aufweist, an dem ein Schieber (12) angeordnet ist, der mittels einer _{[B1]} Verfahrvorrichtung von der offenen Seite der Schüttgutlagerbox (100) zumindest auf eine Länge bis zu der zumindest einen Auslassöffnung (104) verfahrbar ist und der eine Breite aufweist, die zumindest einem Teil oder der ganzen Breite der Rückwand (101) entspricht,
und wobei die Anlage (1) zum Ein- und Auslagern von Schüttgut (1000) keine Erfassungsvorrichtungen hat, die zum Erfassen der Menge an Schüttgut (1000) in der Schüttgutlagerbox (100) ausgebildet und mit einer oder mehreren Steuerungsvorrichtung(en) gekoppelt ist, die die Vorrichtung zum Bewegen von Schüttgut (1000) direkt oder indirekt steuern.

2. Anlage (1) nach Anspruch 1,
**dadurch gekennzeichnet, dass**
eine Schiebevorrichtung (40) an oder vor der Bodenplatte (103) an der offenen Seite der Schüttgutlagerbox (100) angeordnet ist, an der der Rahmen (11), an dem der Schieber (12) angeordnet ist, in Bezug zu der Breite der offenen Seite der zumindest einen Schüttgutlagerbox (100) quer verschiebbar ist, wobei die Schiebevorrichtung (40) eine Schienenvorrichtung (401) zum Verschieben und als Gegenlager (16) für den Rahmen (11) aufweist, die benachbart zu einem oberen Ende des Rahmens, bevorzugt oberenends an den zwei Seitenwänden (102, 102'), der zumindest einen Schüttgutlagerbox (100) vorliegt und die besonders bevorzugt ein Querholm (402) ist, wobei entlang zumindest eines Teils der Länge der ersten Schienenvorrichtung (401) ein oberer, bodenferner Abschnitt (17) des Rahmens (11) verschiebbar ist.

3. Anlage (1) nach Anspruch 1 oder 2,
**dadurch gekennzeichnet, dass**
die Schieberanlage eine Hebevorrichtung aufweist, die mit dem Rahmen (11) gekoppelt ist und dazu ausgebildet ist, die Verfahrvorrichtung mit dem Schieber (12) entlang zumindest eines Teils der Höhe des Rahmens (11) zu verfahren.

4. Anlage (1) nach zumindest einem der Ansprüche 1 bis 3,
**dadurch gekennzeichnet, dass**
der Rahmen (11) zumindest zwei vertikale Stützelemente aufweist, die an einem oberen, bodenfernen Ende durch zumindest ein horizontales Stabilisierungselement (14) miteinander verbunden sind, und an einem unteren, bodennahen Ende zumindest eine Verfahrvorrichtung aufweisen,
wobei bevorzugt die zumindest zwei vertikalen Stützelemente Traversenelemente (111, 112) oder Plattenelemente sind,
wobei die Verfahrvorrichtung Räder oder Rollen (15) aufweist, und/oder wobei das horizontale Stabilisierungselement (14) eine Traversenkonstruktion oder Plattenelemente aufweist.

5. Anlage (1) nach zumindest einem der Ansprüche 1 bis 4,
**dadurch gekennzeichnet, dass**
die Verfahrvorrichtung teleskopierbar ist und von der offenen Seite der Schüttgutlagerbox (100) zumindest auf eine Länge bis zu der zumindest einen Auslassöffnung (104) teleskopierbar ist, wobei der teleskopierbare Schieber (12) eine Mehrzahl ineinander verfahrbarer und teleskopierbarer Schiebeelemente aufweist.

6. Anlage (1) nach Anspruch 5,
**dadurch gekennzeichnet, dass**
eine Vorrichtung (18) zum Halten und Betätigen der teleskopierbaren Schiebeelemente an dem horizontalen Stabilisierungselement (14) des Rahmens (12) angeordnet ist, und/oder
wobei ein erstes der Mehrzahl der Schiebeelemente an einer Befestigungsvorrichtung (30) unten im Rahmen (11) angeordnet ist, und wobei ein letztes der Mehrzahl der Schiebeelemente den Schieber (12) haltert, wobei bevorzugt die teleskopierbaren Schiebeelemente flache Rahmen- oder Plattenelemente (20,21,22,23), Hub- oder Elektrozylinder sind, und/oder
- die Vorrichtung zum Halten und Betätigen (18) Hydraulikelemente oder Seilzugelemente oder Kettenzugelemente oder Elektrozylinder aufweist.

7. Anlage (1) nach Anspruch 6,
**dadurch gekennzeichnet, dass**
die Befestigungsvorrichtung (30) zwischen den zumindest zwei vertikalen Stützelementen des Rahmens (11) positioniert ist und zwei Schenkel aufweist, die jeweils einen Haltefuß (31) aufweisen, an dem ein Schwenkarm (32) befestigt ist, der schwenkbar seitlich mit den teleskopierbaren Schiebeelementen, bevorzugt mit einer der beiden Längskanten des ersten Rahmen- oder Plattenelements (20) verbunden ist,
wobei in einem eingefahrenen Zustand der teleskopierbaren Schiebeelemente die Mehrzahl der Rahmen- oder Plattenelemente (20,21,22,23) an oder in dem ersten der Rahmen- oder Plattenelemente (20) zur Anlage kommt, und wobei in einem eingefahrenen Nichtbenutzungszustand die Schieberanlage von einer Position innerhalb der Schüttgutlagerbox (100) die Rahmen- oder Plattenelemente (20,21,22,23) durch den Schwenkarm (32) unter dem horizontalen Stabilisierungselement (14) des Rahmens (11) aus der Schüttgutlagerbox (100) herausgeschwenkt angeordnet sind und der Schieber (12) in die Schüttgutlagerbox (100) hinein weist.

8. Anlage (1) nach Anspruch 6 oder 7,
**dadurch gekennzeichnet, dass**
die Befestigungsvorrichtung (30) auch die Hebevorrichtung bereitstellt.

9. Anlage (1) nach Anspruch 8,
**dadurch gekennzeichnet, dass**
die Befestigungsvorrichtung (30) die Hebevorrichtung in Zusammenarbeit mit der Vorrichtung (18) zum Halten und Betätigen bereitstellt, wobei die Vorrichtung (18) zum Halten und Betätigen bevorzugt mit einem Seilzugsystem ausgestattet ist, bei dem ein Seil (181), das bis zu einer Halterung (183), die sich an einem dritten Rahmenelement (22) des Schiebers (12) befindet, vorgespannt ist, über ein Rollensystem mit einer motorisierten Seilzugrolle (182) verbunden ist, die an einem der beiden Schwenkarme (32) seitlich angeordnet ist, die zusammen mit der Vorrichtung (18) zum Halten und Betätigen, die eine korrespondierende motorisierte Seilzugrolle umfasst, das Verschwenken der teleskopierbaren Rahmen- oder Plattenelemente (20,21,22,23) möglich macht.

10. Anlage (1) nach zumindest einem der Ansprüche 2 bis 9,
**dadurch gekennzeichnet, dass**
die Schiebevorrichtung (40) an oder vor der Bodenplatte (103) zumindest zwei Schienen (41,42) aufweist, die sich quer entlang der Breite der zumindest einen oder entlang der mehreren Schüttgutlagerboxen (100) erstrecken, und in oder auf denen der Rahmen (11), an dem der Schieber (12) angeordnet ist, verschiebbar ist, und wobei bevorzugt zwischen den zumindest zwei Schienen (41, 42) entlang deren Länge zumindest ein entlang der Schienen verschiebbar befestigtes Profilelement (43) angeordnet ist, das Ausnehmungen (44) aufweist, mit denen die Haltefüße (31) der Befestigungsvorrichtung in Eingriff stehen.

11. Anlage (1) nach Anspruch 10,
**dadurch gekennzeichnet, dass**
die Schiebevorrichtung (40) ferner eine dritte Schiene (45) umfasst, wobei die zwei Schienen (41,42), auf denen die Traversenelemente (111, 112) laufen, keine seitliche Führung bieten, und das untere, Richtung Schüttgutlagerbox (100) weisende Ende (112',111') der Traversenelemente (111, 112) horizontal durch die Schiene (45) geführt wird, die mit den Enden (112',111') der Traversenelemente (111, 112) fest verbunden ist, wobei die Schiene (45) auf oder an der Bodenplatte (103) verläuft und in Taschen der Seitenwände (102) gehalten wird.

12. Anlage (1) nach zumindest einem der Ansprüche 1 bis 11,
**dadurch gekennzeichnet, dass**
der Schieber (12), um das Schüttgut (1000) effektiv aus der Schüttgutlagerbox (100) zu den Auslassöffnungen (104) zu schieben, zu jeder seiner äußeren Seiten einklappbare Seitenelemente (121) hat, die in einem vorzugsweise rechten Winkel oder auch jedem Winkel zwischen 0° und 90° durch einen Hubzylinder (122) pro Seite nach vorne, zur Rückwand (101) hin, eingeklappt werden können.

13. Verfahren zum Ein- und Auslagern von Schüttgut (1000) in einer Anlage (1) nach zumindest einem der Ansprüche 1 bis 12,
**umfassend die Schritte**
- Bereitstellen der Schüttgutlagerbox (100), die zwei Seitenwände (102, 102') und eine offene Seite zum Ein- und Auslagern von Schüttgut aufweist, der gegenüber die Rückwand (101) angeordnet ist, wobei die Seitenwände (102, 102') und die Rückwand (101) auf der Bodenplatte (103) angeordnet sind, und wobei an der zwischen der Bodenplatte (103) und der Rückwand (101) vorliegenden Kante zumindest eine Auslassöffnung für Schüttgut (1000) angeordnet ist, unterhalb der eine Auslagereinrichtung für Schüttgut vorliegt, und
Bereitstellen der Vorrichtung zum Bewegen von Schüttgut (1000), wobei die Auslassöffnung (104), die an der Kante vorliegt, die durch die Rückwand (101) und die Bodenplatte (103) gebildet wird, durch eine oder mehrere Durchtrittsöffnung(en) (104) gebildet wird,
- bei einem Einlagervorgang oder einem Auslagervorgang von Schüttgut (1000) in der Schüttgutlagerbox (100) Positionieren des Schiebers (12) der Schieberanlage in eine Schiebeposition an dem Schüttgut, dazu Verfahren des Schiebers (12) und Bewegen des Schüttgutes (1000).

14. Verfahren nach Anspruch 13,
**umfassend die Schritte**
- Verfahren des Schiebers (12), dessen Breite zumindest einem Teil oder der ganzen Breite der Rückwand (101) entspricht, mittels einer Verfahrvorrichtung von der offenen Seite der Schüttgutlagerbox (100) zumindest auf eine Länge bis zu der zumindest einen Auslassöffnung (104);
und/oder
- quer in Bezug zu der Breite der offenen Seite der zumindest einen Schüttgutlagerbox (100) Verschieben eines Rahmens (11), an dem der Schieber (12) angeordnet ist, an oder mittels einer Schiebevorrichtung, die an oder vor der Bodenplatte (103) an der offenen Seite der Schüttgutlagerbox (100) angeordnet ist, zum Versetzen des Schüttguts (1000) und Überführen des Schüttguts (1000) zu der Auslassöffnung (104) zwecks Auslagerung.

15. Verfahren nach Anspruch 13 oder 14,
**umfassend die Schritte**
- Erstellen eines vorbestimmten Entleerungsmusters unabhängig von einer Erfassung der Menge des Schüttguts in der Schüttgutlagerbox (100),
- Betreiben der Vorrichtungen zum Bewegen von Schüttgut (1000) mit einem Entleerungsmodus der Schüttgutlagerbox (100), der basierend auf dem vorbestimmten Entleerungsmuster ausgeführt wird.

16. Verfahren nach zumindest einem der Ansprüche 13 bis 15,
**umfassend die Schritte**
- Verfahren der teleskopierbaren Verfahrvorrichtung, die eine Mehrzahl Schiebeelemente aufweist, deren letztes Schiebeelement den Schieber (12) haltert, durch eine Hebevorrichtung, die mit dem Rahmen (11) gekoppelt ist, entlang zumindest eines Teil der Höhe des Rahmens (11) oder bis zum oberen Rand des Rahmens (11), um den Schieber (12) jeweils bis zur Höhe einer Oberkante des eingelagerten Schüttguts (1000) anzuheben und dieses zu bewegen, oder den Schieber (12) im Rückhub vom Materialkontakt (Schüttgutkontakt) zu lösen, und
- Bewegen des Schiebers (12) in einer Ebene parallel zur Bodenplatte (103) oder in einem Winkel dazu durch die Hebevorrichtung, die durch Zusammenarbeit einer Befestigungsvorrichtung (30), mit der ein erstes Schiebeelement der teleskopierbaren Verfahrvorrichtung bevorzugt unten am Rahmen (11) angeordnet ist, mit einer Vorrichtung (18) zum Halten und Betätigen der teleskopierbaren Schiebeelemente bereitgestellt wird, die oben an dem horizontalen Stabilisierungselement (14) des Rahmens (12) angeordnet ist.
